# EUROPEAN PATENT SPECIFICATION

(11) **EP 0 681 354 B1**
(45) Date of publication and mention of the grant of the patent: **16.02.2000**
(21) Application number: 95500070.8
(22) Date of filing: 05.05.1995
(51) Int. Cl.: H02G 3/00

(54) **Prefabricated modular electrical distributing ducts**
Vorgefertigte modulare elektrische Verteilungsleitungen
Conduits de distribution électriques modulaires préfabriqués

(30) Priority: 05.05.1994 ES 9400946
(43) Date of publication of application: 08.11.1995
(73) Proprietor: CIAMA BUSBAR S.L., 08190 San Cugat del Valles (Barcelona) (ES)
(72) Inventor: Garcia-Maurino De Vigo, Luis, 08190 San Cugat del Valles (Barcelona) (ES)
(74) Representative: Gonzalez Vacas, Eleuterio

(56) References cited:
- DE-A- 1 490 746
- ES-A- 2 001 987
- GB-A- 556 243

## Description

### OBJECT OF THE INVENTION

The present invention refers to the scope of prefabricated modular electrical distributing ducts, for the distribution of electrical power, where different modules are longitudinally interconnected by the simple plugging, and where each module is capable of receiving branching tongs allowing to establish tappings in the electrical power distribution line, all of it maintaining a perfect sealing.

The object of the invention is to produce the assembling between modules in a very quick and simple way, with optimal possibilities of servicing both from the connection point of view as well as from the isolating point of view.

### BACKGROUND OF THE INVENTION

In the Spanish patent application ES-A-2 001 987, it is described an equipment for the distribution of electrical power, arranged by means of a series of modules, in each one of which a metallic channel participates, constituting the cover of the electrical cabling, at the same time the ground connection, should be properly connected to the ground, establishing itself in the cavity of this metallic channel, with the collaboration of the electrically insulating supports, the mentioned conducting wires, with their ends properly unprotected from their insulating cover so that, with the collaboration of the plugging connection elements to the ends of the metallic channels, both the physical coupling as well as the connection between modules could be established.

Additionally, each metallic channel is provided with a series of windows, at points in which a branching is foreseen, in such a way that in correspondence with each one of such windows the electrical conductors could be tonged by having access through the same branching tongs, which after its coupling the mentioned window is hermetically closed, and at the same time is maintained closed in an inoperative condition, with the collaboration of a tiltable or hinged cover, also with hermetic closure.

The line starts up with a connection box, to which the first module is coupled, the different modules are coupled and connected in series, and from any of them may emerge one or different tappings, all of which are supported, in their terminal, module, by a closing element, also of electronically insulating material, properly protecting the electrical installation but leaving open the possibility of extending the line, through the substitution of such closing element by a new module.

### DESCRIPTION OF THE INVENTION

The invention lies in prefabricated modular electrical distributing ducts as defined in claim 1. It is specifically oriented to the following aspects:
- To obtain an absolute impossibility of erroneous electrical connection between modules.
- The improvement of the sealing.
- A better support and channelling of the conducting wires in the ends.
- An improvement in the coupling between modules.
- An improvement in the ground connection.

In a more precise way and in order to obtain this series of objectives, it is foreseen that the conducting wires remain properly distributed and placed in the end areas of each module or metallic channel, with the collaboration of fixation elements, each one of them being formed by means of two halves, in which some semi-cylindrical channelling are defined which are properly dimensioned to receive the electroconducting cables, these halves being equipped with mutual fixation means which convert the mentioned channelling into ducts where the cables remain perfectly immobilized due to the existence in such channelling of ribs or transversal mordant elements which are engaged in the insulation of the wires.

These fixation elements also have an eccentric stub, with which collaborates a positioning groove or slot, likewise they are located in each one of the ends of the coupling elements between the metallic channels, in such a way that it only exists a possibility of assembling each one of the metallic channel to the coupling element, the corresponding one to a correct connection between the electrical wires.

In relation to another one of the characteristics of the invention the coupling element incorporates at the middle level a perimetric gasket in T section, with its middle branch oriented towards the outside and with its external face of its transversal branch defining two upgoing ramps towards the middle branch, this gasket remaining placed through such transversal branch in a housing of the coupling element, with which the metallic channels, when rising to the limit position of assembling on the coupling element which relates them, reach through its narrow entrance the ramps of the mentioned gasket, wedgingly penetrating in the metallic channels and securing the pretended and mentioned sealing.

This assembling limiting position is definitively stabilized with the collaboration of inserting fixing the pivots in the operationally confronted holes of the metallic channels and the coupling elements.

Finally and according to another one of the characteristics of the invention, it has been foreseen that the copper band through which the electrical continuity is produced between the metallic channels, that is the electrical continuity to ground, which is fixed in the middle point of the coupling element, presenting its ends located in housings of the coupling element itself which define limiting stop pieces for the extension of the contact arches of such band assuring a greater electrical contact thereof on the metallic channels and, in consequence, a better electrical connection.

### DESCRIPTION OF THE DRAWINGS

To complement the description which is being made and with the object of helping to obtain a better understanding of the characteristics of the invention, it is accompanied to the descriptive memory, as an integral part thereof, a set of drawings in which as illustrative and not limiting character, the following is represented:
- Figure 1: shows, according to an schematic representation, an electrical power distribution installation designed according to the patent application ES-A-2 001 987
- Figure 2: shows an exterior view of one of the two halves of a fixation element.
- Figure 3: shows a lateral view of the element represented in the previous figure.
- Figure 4: shows an internal view of the same element.
- Figure 5: shows a longitudinal cross-section according to the cutting line A-B of figure 2.
- Figure 6,: shows a cross-section according to the cutting line C-D of figure 2.
- Figures 7, 8 and 9: show an exterior view, a lateral view and an inner view of the complementary semielement of the figure represented in figures 2 to 6.
- Figure 10: shows a cross-section detailed of the element of figure 7 according to the cutting line E-F of such figure.
- Figure 11: shows an enlarged detail of the cross-section of the previous figure.
- Figures 12, 13 and 14: respectively show two lateral views and a section of the metallic channel in which ends are coupled the fixation elements of the figures 2 to 11.
- Figure 15: shows an elevation lateral view and partially sectioned of the coupling element between the metallic channels of the figures 12 to 14.
- Figure 16: shows a detail in cross section of the coupling element of the previous figure, according to the cutting line G-H of the mentioned figure.
- Figure 17, 18 and 19: show a lateral elevation view, axial view and a section of the sealing gasket that, assembled on the coupling element, is intended to seal both metallic channels coupled thereof.
- Figures 20 and 21: show an axial view and a lateral elevation view and a section of one quarter of one of the fixation pivots of the metallic channels to the coupling elements.
- Figure 22: shows a section view of one branching element according to the patent application ES-A-2 001 987.
- Figure 23.: Shows, according to a view in perspective, a coupling element between two metallic channels, in order to duplicate its modular length.
- Figure 24.: Shows, finally and also according to a perspective view, one of the eccentric fixation of the previous element to the metallic channels.

### PREFERRED EMBODIMENT OF THE INVENTION

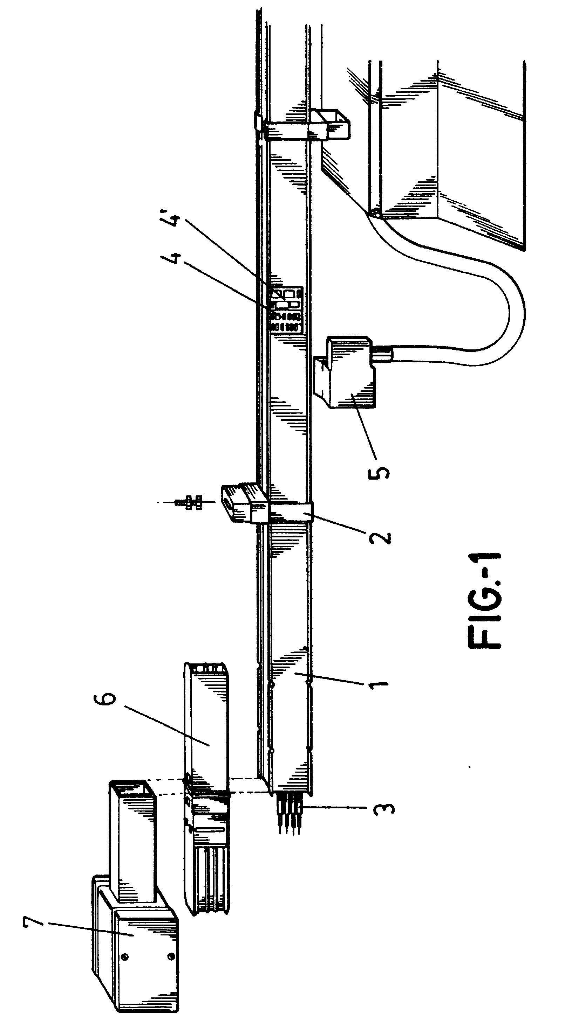

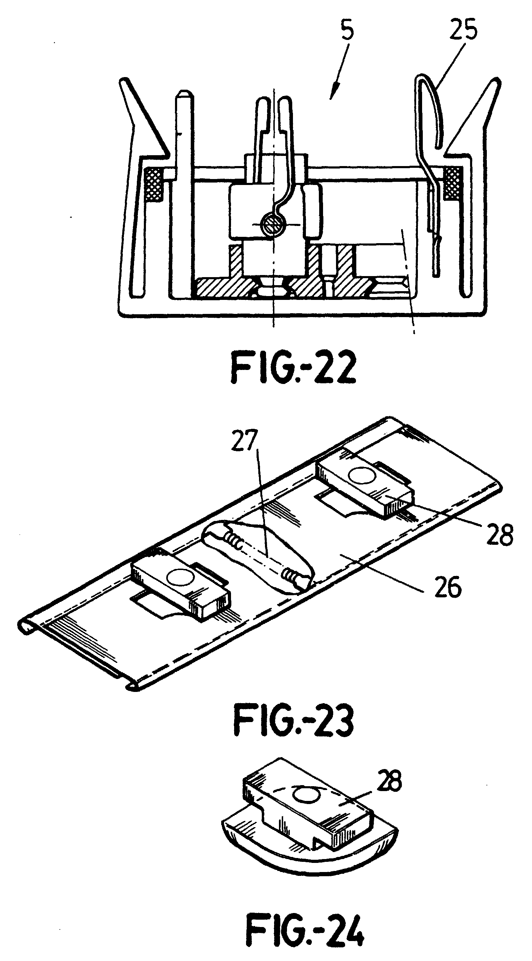

In view of these figures, and more specifically in figure 1, it can be seen the way in which the improvements of the invention are applied to the prefabricated modular electrical ducts in which a series of tubular modules or metallic channels (1) participate, preferably of rectangular section, equipped with exterior clamps (2) for their wall fixation, their support to the roof, etc., the properly electro-isolated electrical wires (3) that constitute the line as such being established in the cavity of these metallic channels (1), and being accessible in any of the modules of metallic channels (1) through windows (4), provided with a hermetic seal tiltable cover (4'), windows (4) through which the branching tongs (5) are accessible as the one appearing in section, in figure 22, the different modules or metallic channels (1) being interrelated through the coupling elements (6), each one of them being simultaneously plugged into the ends of both neighbouring metallic channels (1), to establish both the electrical connection as well as the mechanical fixation among the modules, also using one of these coupling elements (6) for the coupling of the first module (1) to the connection box (7) from which the electrical installation starts up.

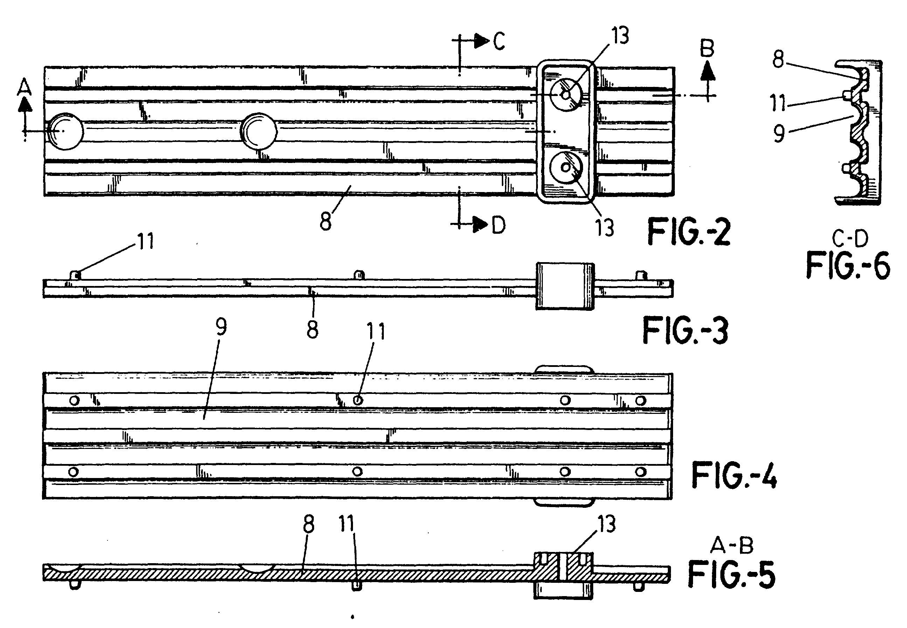

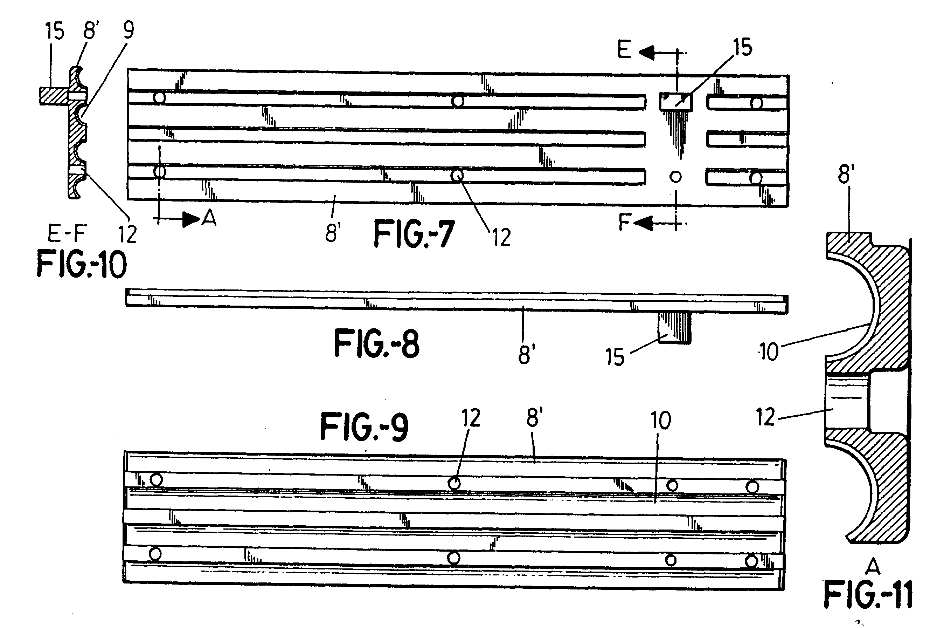

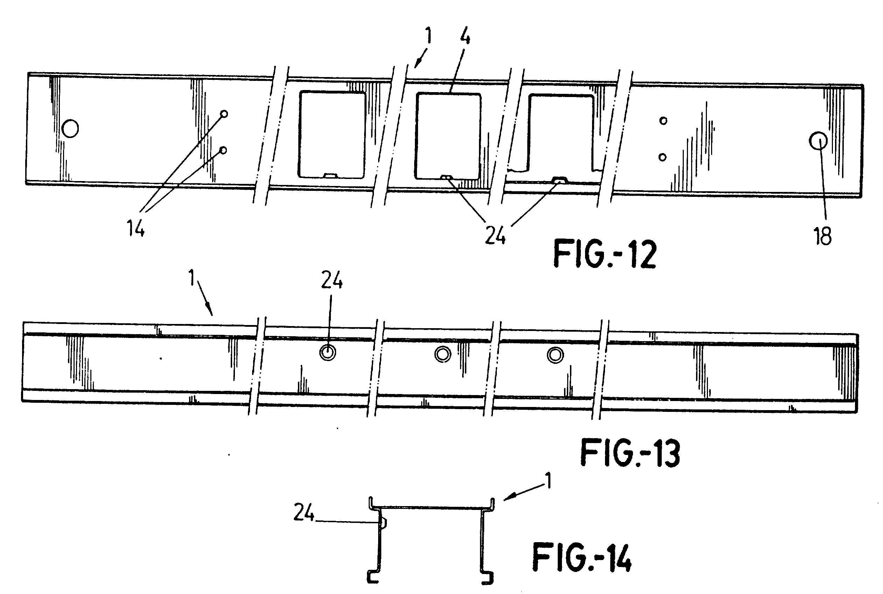

. Now then, starting from this basic and conventional structure and already in agreement with the invention, for a correct establishment and fixation of the cables (3) in the cavity of each metallic channel (1), it has been foreseen the participation of the fixation elements represented in figures 2 to 11, each one of them is structured by means of two halves (8,8'), each one of them has longitudinal channelling (9), semi-cylindrical, dimensionally appropriated to the diameter of the wires (3), and having transversal ribs or mordants (10) which, straining the insulating cover of the wires (3), are assuring a perfect irremovability thereof.

Both halves (8,8') of these fixation elements, are fixed between them with their confronted channels (9) after receiving the cables (3) in these, with the collaboration of the pivots (11) which emerge from the internal face of one of them and are coupled in the holes (12) of the other one.

Additionally these fixation elements (8) incorporate end pivots (13), which are fixed by welding to the metallic channel (1) in the corresponding end, to which purpose such metallic channel (1) has end holes (14) capable of receiving the mentioned pivots (13).

According to another one of the characteristics of the invention these fixation elements (8) are provided with an eccentric pivot (15), and collaborating with them grooves and positioning slots (16) also located eccentrically on the coupling element (6), in such a way that each metallic channel (1) or module of the installation, through the stub (15) which slightly emerges thereof, can only be coupled with the corresponding coupling element (6) in a given position, which is the correct one for the phases RST and N of the different modules that remain duly interconnected, without possibility of error.

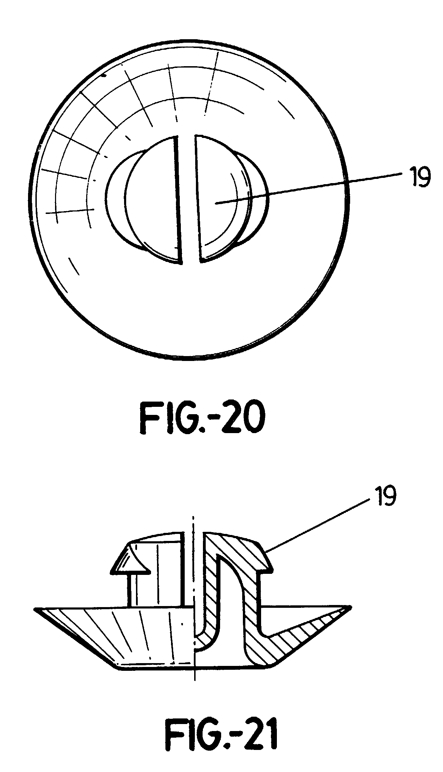

The coupling elements (6) are provided in each one of their two halves, with a drill hole (17) to which is operationally confronted, in a situation of assembly of the metallic channel (1), another hole (18) in the latter, in such a way that through both holes a fixation pivot (19) has the possibility of coupling, which is represented in figures 20 and 21, properly formed to close hermetically the holes (17) and (18) in a way that once the modules are coupled they remain perfectly fixed in an axial sense, without possibility of relative displacement, that is in optimal operative conditions.

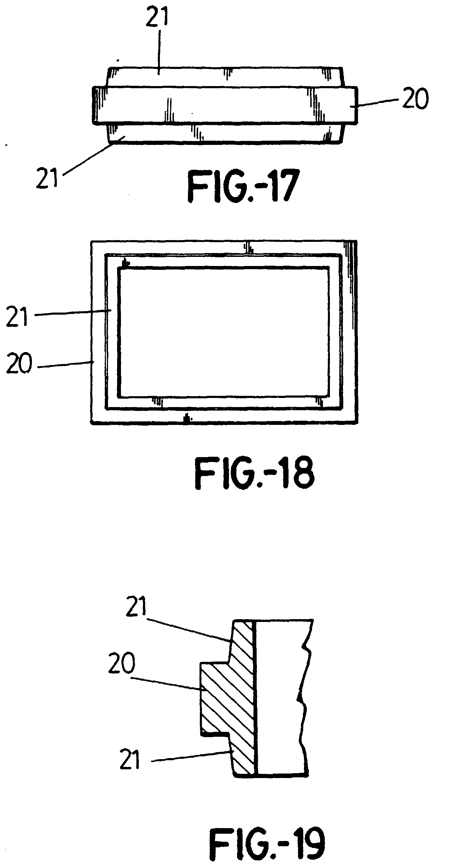

Additionally on the middle area of the coupling element (6) and in the operationally established channelling, a sealing gasket (20) is placed for this purpose, which is represented in detail in figures 17 to 19, and which adopts a general "T" configuration, with its middle branch projecting towards the outside and framed by two ramps or inclined planes (21), rising towards such middle branch, in a way that in the coupling of the metallic channels (1) on the intermediate coupling element (6), the narrow entrances of such channels (1) meet with these inclined planes (21) which provoke a perfect adjustment of such narrow entrance against the gasket (20) and, as a consequence, produce an optimal sealing.

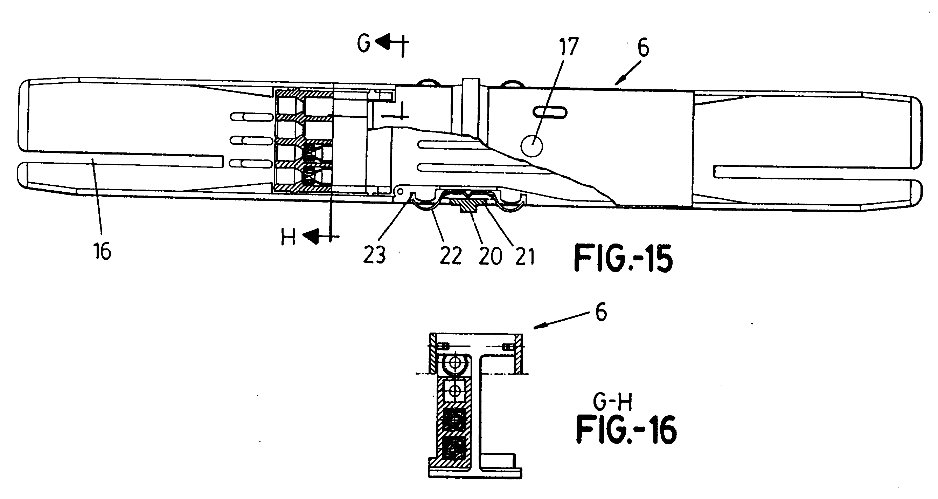

As the metallic channels themselves (1) constitute the ground connection of the installation, there must be established among them an electrical continuity, with the collaboration of bands (22) which has been already foreseen in the patent of the invention 8602137. According to the invention the free ends of these bands (22) are grooved in the housings (23) of the support piece itself (6), functioning as deformation limiting stop pieces for their end lobes of contact, as it can be seen specially in figure 15, assuring in this way a greater pressure of the band (22) against the metallic channels (1) and, as a ground consequence, a better electrical ground connection.

Additionally in the boxes or branching windows (4) of each metallic channel (1), to which a branching tong is coupled (5), a small deformation (24) is produced in the steel sheet, in such a way that when introducing such branching tong (5) the connecting element (25) which produces the ground connection makes contact with the channel, being the branching system automatically protected before the phase connectors and neutral have been connected to their respective wires (3).

Finally it has been foreseen the possibility of mechanically fixing between each other two metallic channels (1), in order to duplicate the length of the module, specifically with the collaboration of the coupling elements as the one shown in figure 23 and with reference (26), which is elastically fixed by means of a spring (27) and with the collaboration of a couple of eccentric pieces (28), as it is represented in detail in figure 24, being strongly coupled to the neighbouring channels producing the effect of a beam.

## Claims

1. Prefabricated modular electrical distributing ducts, of the type which are structured by means of a plurality of metallic tubular channels (1) which are adapted to accommodate electric wires (3), forming such channels (1) into intercoupling modules with the collaboration of coupling elements (6) adapted to be plugged into the narrow entrances of the said channels and equipped with means of electrical connection for the cables of the coupled channels, the modules having at the same time lateral ports (4) for branching tongs (5) which allow to establish tappings in the electric power distribution line, characterized in that as means of fixation of the electric cables (3) in the end areas of the cavity of the metallic channels (1), fixation elements have been provided, consisting of a pair of electrically insulating half-shells (8-8'), each provided with longitudinal semicylindrical grooves (9), adapted to secure the electrical wires (3) in the cavity of said metallic channels (1), said grooves (9) being dimensionally conformed to the section of the wires (3) and provided with transversal mordant ribs (10) to immobilize the wires, the one half-shell (8) having stubs (11) designed to fit into complementary holes (12) in the other half-shell (8') for securing both half-shells (8-8') by tenon and mortise joint together in use, thus achieving a certain special position, so as to allow the hook-up with an adjacent channel, both electrically and mechanically, in a simple manner.

2. Prefabricated modular electrical distributing ducts, according to claim 1, characterized in that each fixation element (8) provided in the ends of the metallic channels (1) has an external and eccentric pivot (15), to which a complementary positioner groove or slot (16) is operationally established in each one of the ends of the coupling elements (6), in a way that through the pivot (15) and the groove (16) it is defined the only position of the metallic channels (1) assembling on the coupling elements (6), which assures the correct connection among the different electrical phases that participate in the installation.

3. Prefabricated modular electrical distributing ducts, according to any one of the preceding claims, characterized in that each coupling element (6) has holes (17) that, with the collaboration of holes (18) operationally established in the ends of the metallic channel (1), allow the fixation between these elements, after their coupling, with the collaboration of fixation pivots (19) having foreseen that such pivots (19) are duly formed in order to close hermetically such holes (17) and (18).

4. Prefabricated modular electrical distributing ducts, according to any one of the previous claims, characterized in that the coupling elements (6) incorporate in their middle perimetric line an external housing for a sealing gasket (20), in T section, which middle branch remains oriented towards the outside and is framed by two ramps or inclined planes (21), rising towards such middle branch (20), which determine in the coupling of the metallic channels (1) a wedging of the narrow entrances on the gasket (20).

5. Prefabricated modular electrical distributing ducts, according to any one of the previous claims, characterized in that electrical connection bands (22) between the metallic channels (1) in order to establish the continuity in the ground line, offer in their free ends located on housings (23) of the coupling element itself (6) a sort of stop pieces to limit the possibility of the deformation of the band (22) improving the tightening thereof on the internal face of the metallic channels (1).

6. Prefabricated modular electrical distributing ducts, according to any one of the previous claims, characterized in that the metallic channels (1) incorporate in their windows (4) the port for branching tongs (5), a deformation (24) in the same steel sheet on which a connector element (25) of the branching tongs acts, which makes the ground connection, in such a way that such connection is previously produced when contacting the phase connectors and neutral of such branching tong with the cabling of the metallic channel (1).

7. Prefabricated modular electrical distributing ducts, according to any one of the preceding claims characterized in that for the mechanical fixation between two metallic channels (1), with the object of duplicating the length of a given module, a second coupling element (26) has been foreseen, which is elastically fixed with the collaboration of a spring (27) and which is provided with a couple of eccentric pieces (28) through which it is coupled to both metallic channels (1) to be joined, producing a beam effect.

## Patentansprüche

1. Vorgefertigte modulare Leitungen zur Stromverteilung, derart, dass sie durch eine Mehrzahl von metallischen rohrförmigen Kanälen (1) gebildet sind, die so angepasst sind, dass sie elektrische Kabel (3) aufnehmen können, wobei die genannten Kanäle (1) zusammen mit Kupplungselementen (6) Kupplungsbaugruppen bilden, wobei letztere so angepasst sind, dass sie innerhalb der engen Eingänge der genannten Kanäle angeschlossen werden können und mit einem elektrischen Verbindungsmittel für die Kabel der angeschlossenen Kanäle ausgerüstet sind, wobei die Baugruppen gleichzeitig seitliche Anschlüsse (4) für Abzweigklemmen (5) aufweisen, die es ermöglichen, an der Verteilungslinie für elektrische Leistung Abzweigungen anzubringen, dadurch gekennzeichnet, dass als Befestigungsmittel der elektrischen Kabel (3) an den Endbereichen der Vertiefung der genannten metallischen Kanäle (1) Befestigungselemente bereitgestellt werden, die aus einem Paar elektrisch isolierender Halbschutzvorrichtungen (8-8') bestehen, von denen beide mit halbzylinderförmigen länglichen Nuten (9) versehen sind, die so angepasst sind, dass die elektrischen Kabel (3) in der Vertiefung der genannten metallischen Kanälen (1) befestigt werden können, wobei die genannten Nuten (9) in den Abmessungen an den Querschnitt der Kabel (3) angepasst sind und mit gezahnten Querrippen (10) versehen sind, um die Kabel festzulegen, wobei die erste Halbschutzvorrichtung (8) Vorsprünge (11) aufweist, die ausgelegt sind, um sich an die komplementären Bohrungen (12) der anderen Halbschutzvorrichtung (8') anzupassen, um beide Halbschutzvorrichtungen (8-8') während der Benutzung mittels einer Verbindung durch Docht und Einkerbung zu befestigen, wobei auf diese Art eine bestimmte Sonderposition erreicht wird, so dass sowohl elektrisch als auch mechanisch eine einfache Kopplung mit einem benachbarten Kanal erreicht wird.

2. Vorgefertigte modulare Leitungen zur Stromverteilung nach Anspruch 1, dadurch gekennzeichnet, dass jedes an den Enden der metallischen Kanäle (1) vorgesehene Befestigungselement (8) einen exzentrischen und äusseren Zapfen (15) aufweist, an dem an beiden Enden der Kupplungselemente (6) operativ eine komplementäre Kerbe oder Nut (16) zur Positionierung angebracht wird, so dass über den Zapfen (15) und die Nut (16) die einzige Position der metallischen Kanäle (1) festgelegt wird, wobei letztere über den Kupplungselementen (6) eingebaut werden, was eine ordnungsgemässe Verbindung der an der Installation beteiligten verschiedenen elektrischen Phasen gewährleistet.

3. Vorgefertigte modulare Leitungen zur Stromverteilung nach irgendeinem der vorhergehenden Ansprüche, dadurch gekennzeichnet, dass jedes Kupplungselement (6) Bohrungen (17) aufweist, die in Zusammenwirkung mit den Bohrungen (18), die operativ an den Enden des metallischen Kanals (1) angebracht werden und nach der Kupplung in Zusammenwirkung mit den Befestigungszapfen (19) eine Befestigung zwischen den beiden Elementen erlaubt, wobei vorgesehen ist, dass die genannten Zapfen (19) ordnungsgemäss ausgeführt sind, um die genannten Bohrungen (17) und (18) luftdicht abzuschliessen.

4. Vorgefertigte modulare Leitungen zur Stromverteilung nach irgendeinem der vorhergehenden Ansprüche, dadurch gekennzeichnet, dass die Kupplungselemente (6) an ihrer halben Umfangslinie mit einem äusseren Gehäuse für eine einen T-förmigen Querschnitt aufweisende Dichtung (20) ausgestattet sind, deren halbe Abzweigung nach aussen gerichtet bleibt und in zwei Rampen oder geneigten Ebenen (21) unterteilt ist, die sich zur genannten Abzweigung (20) erheben und die bei der Kupplung der metallischen Kanäle (1) eine Verbindung der engen Eingänge auf der Dichtung (20) festlegen.

5. Vorgefertigte modulare Leitungen zur Stromverteilung nach irgendeinem der vorhergehenden Ansprüche, dadurch gekennzeichnet, dass die Bänder (22) für die elektrische Verbindung zwischen den metallischen Kanälen (1) für die Herstellung einer Durchgängigkeit der Erdung an ihren an den Gehäusen (23) des eigentlichen Kupplungselements (6) befindlichen freien Enden eine Art von Feststellungsteilen aufweisen, um die Deformierungsmöglichkeiten des Bands (22) zu begrenzen und somit die Spannung desselben an der Innenoberfläche der metallischen Kanäle (1) zu verbessern.

6. Vorgefertigte modulare Leitungen zur Stromverteilung nach irgendeinem der vorhergehenden Ansprüche, dadurch gekennzeichnet, dass die metallischen Kanäle (1) an ihren Fenstern (4) den Anschluss für die Abzweigklemmen (5) aufweisen, eine Verformung (24) auf der Stahlfolie selbst, auf die ein Verbindungselement (25) der Abzweigklemmen wirkt, welches den Erdanschluss darstellt, so dass die genannte Verbindung vorher stattfindet, wenn die Anschlüsse an die Phase und an den Nullpunkt der genannten Abzweigklemmen mit der Verkabelung des metallischen Kanals (1) verbunden werden.

7. Vorgefertigte modulare Leitungen zur Stromverteilung nach irgendeinem der vorhergehenden Ansprüche, dadurch gekennzeichnet, dass für die mechanische Befestigung zwischen den metallischen Kanälen (1) zur Verdoppelung der Länge einer bestimmten Baugruppe ein zweites Kupplungselement (26) vorgesehen ist, das in Zusammenwirkung mit einer Feder (27) elastisch verbunden ist und das mit einem Paar exzentrischer Teile (28) versehen ist, über die es an beide zu verbindenden metallischen Kanälen (1) angeschlossen wird und somit die Wirkung eines Schwinghebels hat.

## Revendications

1. Conduits modulaires préfabriqués de distribution électrique, d'un type tel, qu'ils sont structurés au moyen d'une pluralité de canaux (1) tubulaires métalliques, qui sont adaptés pour loger des câbles électriques (3), les dits canaux (1) constituant des modules d'interaccouplement avec la collaboration d'organes (6) d'accouplement adaptés pour être connectés à l'intérieur des entrées étroites des canaux cités et équipés avec un moyen de connexion électrique pour les câbles des canaux accouplés, les modules ayant à la fois des ports latéraux (4) pour des pinces (5) de ramification, qui permettent d'établir des dérivations dans la ligne de distribution de puissance électrique, caractérisés par le fait que, comme moyen de fixation des câbles électriques (3) dans les zones extrêmes de la cavité des canaux métalliques (1), des organes de fixation ont été aménagés, constitués par une paire de semiprotecteurs électriquement isolants (8 - 8'), chacun desquels est muni de rainures (9) semicylindriques longitudinales adaptées pour fixer les câbles électriques (3) dans la cavité des dits canaux métalliques (1), les dites rainures (9) étant adaptées quant à leurs dimensions à la section des câbles (3) et étant munies de nerfs (10) transversaux mordants pour immobiliser les câbles, le premier semiprotecteur (8) ayant des saillies (11) conçues pour s'accoupler dans des perforations complémentaires (12) dans l'autre semiprotecteur (8') pour fixer les deux semiprotecteurs (8 - 8') pendant leur utilisation au moyen d'une union de mèche et d'entaillure, en obtenant de cette façon une certaine position spéciale, pour permettre l'accouplement avec un canal adjacent, aussi bien électriquement que mécaniquement, d'une façon facile.

2. Conduits modulaires préfabriqués de distribution électrique, selon la revendication 1, caractérisés par le fait que chaque organe (8) de fixation aménagé dans les extrémités des canaux métalliques (1) a un pivot (15) excentrique et externe, auquel se fixe de manière opérationnelle une entaille ou rainure (16) pour se positionner de façon complémentaire à chacune des extrémités des organes (6) d'accouplement, de telle manière qu'à travers le pivot (15) et de la rainure (16) se définit la position unique des canaux métalliques (1) qui s'installent sur les organes (6) d'accouplement, ce qui assure la connexion correcte entre les différentes phases électriques, qui participent dans l'installation.

3. Conduits modulaires préfabriqués de distribution électrique, selon une quelconque des revendications précédentes, caractérisés par le fait que chaque organe (6) d'accouplement a des perforations (17) qui, avec la collaboration des perforations (18) établies de manière opérationnelle aux extrémités du canal métallique (1), permettent la fixation entre ces organes, après leur accouplement, avec la collaboration de pivots (19) de fixation, en ayant prévu que les dits pivots (19) sont dûment formés pour fermer hermétiquement les dites perforations (17) et (18).

4. Conduits modulaires préfabriqués de distribution électrique, selon une quelconque des revendications précédentes, caractérisés par le fait que les organes (6) d'accouplement incorporent dans leur ligne de périmètre moyenne une carcasse externe pour un joint (20) de scellage, avec une section en forme de T, dont la ramification moyenne se maintient orientée vers l'extérieur et qui est structuré en deux rampes ou plans inclinés (21), qui s'élèvent vers la dite ramification (20) moyenne, qui déterminent dans l'accouplement des canaux (1) métalliques, une connexion des entrées étroites sur le joint (20).

5. Conduits modulaires préfabriqués de distribution électrique, selon une quelconque des revendications précédentes, caractérisés par le fait que les bandes (22) de connexion électrique entre les canaux métalliques (1) pour établir la continuité dans la ligne de terre, offrent à leurs extrémités libres localisées dans les carcasses (23) de l'organe (6) d'accouplement proprement dit, une classe de pièces de rétention pour limiter la possibilité de déformation de la bande (22) en améliorant le tendu de celle-ci dans la surface interne des canaux métalliques (1).

6. Conduits modulaires préfabriqués de distribution électrique, selon une quelconque des revendications précédentes, caractérisés par le fait que les canaux métalliques (1) incorporent dans leurs fenêtres (4) le port pour pinces (5) de ramification, une déformation (24) dans la même feuille d'acier sur laquelle agit un organe connecteur (25) des pinces de ramification, qui constitue la connexion à terre, de telle façon que la dite connexion se produit préalablement lorsque les connecteurs de phase et le neutre des dites pinces de ramification entrent en contact avec le câblage du canal métallique (1).

7. Conduits modulaires préfabriqués de distribution électrique, selon une quelconque des revendications précédentes, caractérisés par le fait que pour la fixation mécanique entre deux canaux (1) métalliques, dans le but de doubler la longueur d'un module donné, un deuxième organe (26) d'accouplement a été prévu, qui est fixé de manière élastique avec la collaboration d'un ressort (27) et qui est muni d'une paire de pièces excentriques (28) à travers lesquelles il s'accouple avec les deux canaux métalliques (1) qui vont s'unir, en produisant un effet de balançoire.
